# EUROPÄISCHE PATENTSCHRIFT

(11) **EP 0 465 940 B1**
(45) Veröffentlichungstag und Bekanntmachung des Hinweises auf die Patenterteilung: **17.05.1995**
(21) Anmeldenummer: 91110636.7
(22) Anmeldetag: 27.06.1991
(51) Int. Cl.: C08L 59/00, C08K 3/08, B22F 3/22, B22F 1/00

(54) **Thermoplastische Massen für die Herstellung metallischer Formkörper**
Thermoplastic masses for preparing metallic mouldings
Masses thermoplastiques pour la fabrication d'articles moulés métalliques

(30) Priorität: 07.07.1990 DE 4021739
(43) Veröffentlichungstag der Anmeldung: 15.01.1992
(73) Patentinhaber: BASF Aktiengesellschaft, 67063 Ludwigshafen (DE)
(72) Erfinder: Ebenhoech, Johan, Dr., W-6700 Ludwigshafen (DE); Weinand, Dieter, Dr., W-6731 St. Martin (DE); Kochanek, Wolfgang, Dr., W-6730 Neustadt (DE); Bloemacher, Martin, W-6701 Meckenheim (DE)

(56) Entgegenhaltungen:
- EP-A- 413 231
- EP-A- 0 114 746
- EP-A- 0 329 475
- EP-A- 0 424 739
- FR-A- 2 488 880

## Beschreibung

Die vorliegende Erfindung betrifft thermoplastische Massen für die Herstellung metallischer Formkörper, enthaltend
A) 40 - 70 Vol.% eines sinterbaren pulverförmigen Metalls oder einer pulverförmigen Metallegierung oder deren Mischungen,
B) 30 - 60 Vol.% einer Mischung aus
   B1) 80 - 98 Gew.-% eines Polyoxymethylenhomo- oder -copolymerisats und
   B2) 2 - 20 Gew.-% eines Polyolefins oder einer Mischung von Polyolefinen
   als Bindemittel, und
C) 0 - 5 Vol.% eines Dispergierhilfsmittels.

Weiterhin betrifft die Erfindung ein Verfahren zur Herstellung solcher Massen. Außerdem betrifft die Erfindung die Verwendung derartiger thermoplastischer Massen zur Herstellung von metallischen Formkörpern. Schließlich betrifft die Erfindung auch ein Verfahren zur Entfernung des Bindemittels aus einem Formkörper aus einer derartigen thermoplastischen Masse.

Es ist bekannt, Formteile aus anorganischen Materialien dadurch herzustellen, daß man ein Keramikpulver oder ein Metallpulver mit einem thermoplastischen Harz vermischt, die Mischung zu einem grünen Formkörper verformt, das thermoplastische Harz entfernt und anschließend diesen Grünling zu dem Formkörper versintert. Gemäß der EP-PS 125 912 wird der Grünling vor seiner Sinterung zu seiner im wesentlichen endgültigen Gestalt bearbeitet. Als thermoplastisches Harz bzw. Bindemittel werden z.B. Polystyrol, Polypropylen, Polyethylen und Ethylen-Vinylacetat-Copolymere eingesetzt. Diese Bindemittel werden aus dem Grünling durch Erhitzen auf Temperaturen von 300 bis 550°C während 3 bis 8 Stunden entfernt. Dabei werden die Bindemittel thermisch gespalten. Es muß sehr vorsichtig und langsam auf diese Temperaturen erhitzt werden, damit der Grünling nicht durch unkontrollierten Zerfall der organischen Substanz und damit verbundener Rißbildung geschädigt wird. Aus diesem Grunde soll die Aufheiztemperatur nur 4°C/Stunde betragen. In der US-PS 4 671 912 werden sogar niedrigere Aufheiztemperaturen von 1 bis 2°C/Stunde, zumindest solange, bis die Hälfte des Bindemittels entfernt ist, empfohlen. Diese langen Aufheizperioden von mehreren Tagen vermindern die Wirtschaftlichkeit dieser Verfahren stark.

Zur Beschleunigung der Aufheizzeiten wird in der EP-PS 115 104 empfohlen, als Bindemittel ein Gemisch aus einem oxidierten Paraffinwachs oder einem oxidierten mikrokristallinen Wachs mit einer höheren Fettsäure einzusetzen. In der EP-PS 114 746 werden thermoplastische Massen beschrieben, die nichtmetallische Pulver enthalten. Das für die Entfernung des Bindemittels beschriebene Verfahren führt bei Massen, die Metallpulver oder Pulver von Metallegierungen enthalten, zu nicht völlig zufriedenstellenden Ergebnissen.

Ein Nachteil bei allen diesen Verfahren, bei denen Thermoplaste oder Wachse eingesetzt werden, besteht darin, daß der Grünkörper zwecks pyrolytischer Entfernung des Bindemittels auf Temperaturen oberhalb des Erweichungspunktes des Bindemittels erhitzt werden muß, wodurch die Gefahr einer Verformung besteht. Zur Vermeidung einer solchen Verformung wird daher in der US-PS 4 708 838 und in der JP-OS 62/12674 vorgeschlagen, den Grünkörper in einem keramischen Pulver mit hoher thermischer Stabilität einzubetten.

Es ist aber auch bekannt, das Bindemittel aus dem Grünling nicht pyrolytisch sondern durch Extraktion mit einem Lösungsmittel zu entfernen. Gemäß der JP-OS 62/278160 wird als Lösungsmittel überkritisches Kohlendioxid bei 60°C und einen Druck von 200 kg/cm², gemäß der EP-PS 206 685 flüssiges Kohlendioxid bei Temperaturen von -30°C bis 31,1°C eingesetzt. Für die Durchführung dieser Verfahren benötigt man jedoch spezielle Druckapparaturen.

In den deutschen Patentanmeldungen P 39 26 869 und P 40 00 278 werden Verfahren zur Herstellung eines anorganischen Sinterformteils durch Verformen eines Gemisches aus einem sinterbaren anorganischen Pulver und Polyoxymethylen (z.B. gemäß EP-A 114 746) als Bindemittel durch Spritzgießen oder Strangpressen zu einem Grünkörper, Entfernung des Bindemittels und Sintern beschrieben, wobei man das Polyoxymethylen durch Behandeln des Grünkörpers in einer gasförmigen, säurehaltigen Atmosphäre entfernt. Als Säuren werden bei diesem Verfahren Protonensäuren eingesetzt, also Säuren, die bei Reaktion mit Wasser in ein Proton (hydratisiert) und ein Anion gespalten werden, oder BF₃ oder dessen Etherate eingesetzt.

Bei Verwendung von reinem Polyoxymethylen mit geringem Comonomeranteil als Bindemittel in den Verfahren der vorstehend genannten älteren deutschen Patentanmeldungen bei der Herstellung von Formkörpern bzw. Formteilen mit größeren Wandstärken tritt jedoch ein Problem auf, welches durch die hohe Kristallisationsgeschwindigkeit des Polyoxymethylens hervorgerufen wird. Die Schmelze erstarrt an der Wand der beim Spritzgießen verwendeten, normalerweise gekühlten Form schneller als im Inneren, d.h. der innere Bereich des Formkörpers kristallisiert später als der äußere Teil. Da die Kristallisation von einer Volumenkontraktion begleitet ist, entstehen Risse im Inneren des Formkörpers, da die bereits erstarrten Außenteile der Volumenkontraktion nicht mehr folgen können.

In der bereits genannten EP-A 114 746 wird vorgeschlagen, vorzugsweise ein Polyoxymethylencopolymerisat mit 20 bis 80 Mol.% Comonomeranteil zu verwenden. Derartige Copolymerisate weisen einen niedrigeren Schmelzpunkt, eine niedrigere Kristallinität und eine erhöhte Weichheit und Flexibilität gegenüber den entsprechenden Polyoxymethylenhomopolymerisaten auf.

Dies hat jedoch auch zur Folge, daß die Abkühlzeiten deutlich verlängert und die Klebeneigung des Formteils in der Form erhöht wird. Die Entbinderung muß wegen der niedrigeren Schmelzpunkte der Copolymerisate auch bei niedrigeren Temperaturen vorgenommen werden, wodurch die zur Entbinderung benötigte Zeit länger wird.

Die EP-A 329 475 offenbart thermoplastische Massen aus Metallpulver und Polyoxymethylen (Ansprüche 1, 4; Beispiele 2 und 3). Allerdings kann es auch hier aufgrund der raschen Kristallisationsgeschwindigkeit des Polyoxymethylens zu Rissen beim Abkühlen kommen und im Falle eines zunehmenden Comonomeranteils werden die Formmassen klebriger.

Der vorliegenden Erfindung lag daher die Aufgabe zugrunde, thermoplastische Massen für die Herstellung metallischer Formkörper zur Verfügung zu stellen, die die vorstehend beschriebenen Nachteile nicht aufweisen und aus denen in wirtschaftliche Verfahren riß- und porenfreie metallische Formkörper hergestellt werden können.

Diese Aufgabe wird erfindungsgemäß gelöst durch thermoplastische Massen gemäß Anspruch 1.

Bevorzugte Massen dieser Art sind den Unteransprüchen zu entnehmen.

Als Komponente A) enthalten die erfindungsgemäßen thermoplastischen Massen 40 bis 70, vorzugsweise 45 bis 60 Vol.% eines pulverförmigen Metalls oder einer pulverförmigen Metallegierung oder deren Mischungen.

Als Metalle, die in Pulverform enthalten sein können, seien nur beispielsweise Eisen, Cobalt, Nickel und Silizium genannt; Legierungen sind z.B. Leichtmetallegierungen auf der Basis von Aluminium und Titan sowie Legierungen mit Kupfer oder Bronze. Schließlich kommen auch Hartmetalle wie Wolframcarbid, Borcarbid oder Titannitrid in Kombination mit Metallen wie Cobalt und Nickel in Betracht. Letztere können bei der Herstellung von metallgebundenen Hartschneidwerkzeugen (sog. Cermets) eingesetzt werden.

Ein Teil der Komponente A), vorzugsweise nicht mehr als 50 Gew.-%, insbesondere 5 bis 20 Gew.-%, bezogen auf die Komponente A) kann durch anorganische Fasern oder Whisker ersetzt werden, z.B. aus Al₂O₃, SiC oder Si₃N₄.

Als Komponente B) enthalten die erfindungsgemäßen thermoplastischen Massen 35 bis 60, vorzugsweise 40 bis 55 Vol.% einer Mischung aus
B1) 80 bis 98, insbesondere 85 bis 98 Gew.-%, bezogen auf B), eines Polyoxymethylenhomo- oder -copolymerisats und
B2) 2 bis 20, insbesondere 2 bis 15 Gew.-% eines Polyolefins oder einer Mischung von Polyolefinen.

Die Polyoxymethylenhomo- oder -copolymerisate sind dem Fachmann an sich bekannt und in der Literatur beschrieben.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung bevorzugte Polyoxymethylencopolymere enthalten neben den wiederkehrenden Einheiten -OCH₂- noch bis zu 50, vorzugsweise 0,1-20 und insbesondere 0,3-10 mol.% an wiederkehrenden Einheiten 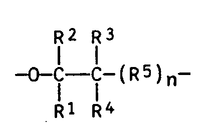
wobei R¹ bis R⁴ unabhängig voneinander ein Wasserstoffatom, eine C₁-C₄-Alkylgruppe oder eine halogensubstituierte Alkylgruppe mit 1-4 C-Atomen und R⁵ eine -CH₂-, -CH₂O-, eine durch C₁-C₄-Alkyl- oder C₁-C₄-Haloalkyl substituierte Methylengruppe oder eine entsprechende Oxymethylengruppe darstellen und n einen Wert im Bereich von 0-3 hat. Vorteilhafterweise können diese Gruppen durch Ringöffnung von cyclischen Ethern in die Copolymere eingeführt werden. Bevorzugte cyclische Ether sind solche der Formel 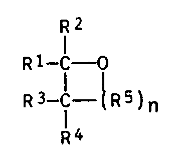
wobei R¹-R⁵ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und Dioxepan als cyclische Ether genannt sowie lineare Oligo- oder Polyformale wie Polydioxolan oder Polydioxepan als Comonomere genannt.

Als Komponente B1) ebenfalls geeignet sind Oxymethylenterpolymerisate, die beispielsweise durch Umsetzung von Trioxan, einem der vorstehend beschriebenen cyclischen Ether und einem dritten Monomeren, vorzugsweise einer bifunktionellen Verbindung der Formel 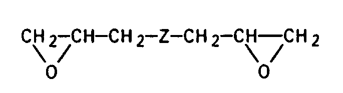
wobei Z eine chemische Bindung, -O- oder -ORO- (R= C₁-C₈-Alkylen oder C₃-C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2-8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol um nur einige Beispiele zu nennen.

Verfahren zur Herstellung der vorstehend beschriebenen Homo- und Copolymerisate sind dem Fachmann bekannt und in der Literatur beschrieben, so daß sich hier nähere Angaben erübrigen.

Die bevorzugten Polyoxymethylenhomo- bzw. Copolymerisate haben Schmelzpunkte von mindestens 150°C und Molekulargewichte (Gewichtsmittelwert) im Bereich von 5000 bis 150000, vorzugsweise von 7000 bis 60000.

Komponente B2 besteht aus Polyolefinen, oder deren Mischungen.

Als Polyolefine seien solche mit 2 bis 8 C-Atomen, insbesondere 2 bis 4 C-Atomen genannt sowie deren Copolymerisate. Besonders bevorzugt seien Polyethylen und Polypropylen sowie deren Copolymere genannt, wie sie dem Fachmann bekannt und kommerziell erhältlich sind, beispielsweise unter dem Handelsnamen Lupolen® bzw. Novolen® von der BASF AG.

Als Komponente C) können die erfindungsgemäßen thermoplastischen Massen 0 - 5, vorzugsweise 1 - 5 Vol.-% eines Dispergierhilfsmittels enthalten. Beispielhaft seien hier nur oligomeres Polyethylenoxid mit einem mittleren Molekulargewicht von 200 - 600, Stearinsäure, Stearinsäureamid, Hydroxistearinsäure, Fettalkohole, Fettalkoholsulfonate und Blockcopolymere aus Ethylen- und Propylenoxid genannt.

Zusätzlich können die thermoplastischen Massen auch übliche Zusatzstoffe und Verarbeitungshilfsmittel, die die rheologischen Eigenschaften der Mischungen bei der Verformung günstig beeinflussen, enthalten.

Die Herstellung der erfindungsgemäßen thermoplastischen Massen erfolgt nach dem erfindungsgemäßen Verfahren durch Aufschmelzen der Komponente B), vorzugsweise in einem Zweischneckenextruder, bei Temperaturen von vorzugsweise 150 bis 220°C, insbesondere 170 bis 200°C. Die Komponente A) wird anschließend bei Temperaturen im gleichen Bereich, in der erforderlichen Menge zu dem Schmelzestrom der Komponente B) dosiert. Vorteilhafterweise enthält die Komponente A) auf der Oberfläche das oder die Dispergierhilfsmittel C).

Eine besonders bevorzugte Vorrichtung zur Dosierung der Komponente A) enthält als wesentliches Element eine in einem heizbaren Metallzylinder befindliche Förderschnecke, die die Komponente A) in die Schmelze der Komponente B) fördert.

Das vorstehend beschriebene Verfahren hat gegenüber der Mischung der Komponenten bei Raumtemperatur und anschließender Extrusion unter Temperaturerhöhung den Vorteil, daß eine Zersetzung des als Bindemittel eingesetzten Polyoxymethylens infolge der bei dieser Variante auftretenden hohen Scherkräfte weitgehend vermieden wird.

Für die Verformung durch Spritzguß können die üblichen Schnecken- und Kolbenspritzgußmaschinen eingesetzt werden. Die Verformung erfolgt im allgemeinen bei Temperaturen von 175 bis 200°C und Drucken von 3000 bis 20 000 kPa in Formen, die eine Temperatur von 60 - 120°C aufweisen.

Die Extrusion zu Rohren, Stangen und Profilen erfolgt vorzugsweise bei 170 bis 200°C.

Zur Entfernung des Bindemittels (Entbinderung) werden die nach der Verformung enthaltenen Grünkörper vorzugsweise zunächst in Anlehnung an das Verfahren der älteren deutschen Patentanmeldungen P 39 29 869 bzw. 40 00 278 mit einer gasförmigen säurehaltigen Atmosphäre behandelt.

Diese Behandlung erfolgt nach dem erfindungsgemäßen Verfahren bei Temperaturen im Bereich von 20 bis 180°C über einen Zeitraum von 0,1 bis 24 h, vorzugsweise 0,5 bis 12 h.

Geeignete Säuren für die Behandlung in dieser ersten Stufe des erfindungsgemäßen Verfahrens sind anorganische, bei Raumtemperatur bereits gasförmige, zumindest aber bei der Behandlungstemperatur verdampfbare Säuren. Beispielhaft seien die Halogenwasserstoffsäuren und HNO₃ genannt. Geeignete organische Säuren sind solche, die bei Normaldruck eine Siedetemperatur von weniger als 130°C haben, z.B. Ameisensäure, Essigsäure oder Trifluoressigsäure oder deren Mischungen.

Weiterhin geeignet als Säure sind BF₃ oder dessen Addukte an organische Ether. Ganz allgemeinen hängt die erforderliche Behandlungsdauer von der Behandlungstemperatur und der Konzentration der Säure in der Behandlungsatmosphäre ab.

Wird ein Trägergas verwendet, so wird dies im allgemeinen vorher durch die Säure geleitet und mit dieser beladen. Das so beladene Trägergas wird dann auf die Behandlungstemperatur gebracht, die zweckmäßigerweise höher als die Beladungstemperatur ist, um eine Kondensation der Säure zu vermeiden.

Bevorzugt wird die Säure über eine Dosiereinrichtung dem Trägergas zugemischt und die Mischung so weit erwärmt, daß die Säure nicht mehr kondensieren kann.

Die Behandlung in der ersten Stufe wird so lange durchgeführt, bis der Polyoxymethylenanteil B1) des Bindemittels zu mindestens 80 %, vorzugsweise zu mindestens 90 Gew.-%, entfernt ist. Dies läßt sich leicht an der Gewichtsabnahme erkennen. Anschließend wird das so erhaltene Produkt 0,1 bis 12, vorzugsweise 0,3 bis 6 h auf 250 bis 500, vorzugsweise 350 bis 450°C erhitzt, um den noch vorhandenen Rest des Bindemittels vollständig zu entfernen.

Das so vom Bindemittel befreite Produkt kann in üblicher Weise durch Sintern in einen metallischen Formkörper überführt werden.

Die erfindungsgemäßen thermoplastischen Massen haben den Vorteil, daß die daraus hergestellten Grünkörper bzw. metallischen Formkörper auch bei großen Wandstärken frei von Rissen und Poren sind.

Zusätzlich ist als Vorteil zu werten, daß die Entfernung des Bindemittels im Prinzip in zwei Stufen erfolgt. Zunächst wird das Polymerisat B1) bei relativ niedrigen Temperaturen durch hydrolytischen Abbau entfernt, wobei der größte Teil des Polymerisats B2) verbleibt. Die danach erhaltenen Produkte (Weißkörper) sind relativ stabil und können problemlos gehandhabt oder transportiert werden. Die Entfernung des Rests an Polymer B2) kann dann vorzugsweise thermisch bei Temperaturen von 250 bis 500°C erfolgen.

### Beispiel 1

In einen Doppelwellenextruder mit 30 mm Wellendurchmesser wurden 5,0 kg/h eines Polyoxymethylens, das 2,5 Gew.-% Butandiolformal als Comonomeres enthielt und 0,6 kg/h eines Standard-Polyethylens mit niedriger Dichte (Dichte = 0,917 g/ml), MFI 190/2,16 = 20 g/10 min (best. nach DIN 53 735) und niedriger Schmelzviskosität dosiert. Das Material wurde bei 180°C aufgeschmolzen, die Wellendrehzahl betrug 70 Upm.

In einen seitlich an diesen Extruder angeflanschten Extruder, der mit einer Förderwendel für Pulver ausgerüstet war, wurden 45 kg/h Eisenpulver, das 0,25 Gew.-% eines Polyethylenoxids der Molmasse 400 als Dispergator enthielt, dosiert und bis zum Ende der Förderschnecke auf 170°C erwärmt.

Am Ende der Förderstrecke wurde das Metallpulver mit dem Schmelzestrom vermischt, die Mischung geschert, homogenisiert und als Stränge durch Düsen gepreßt. Die Stränge wurden in einem Luftstrom abgekühlt und granuliert. Das so erhaltene Granulat enthielt 57 Vol.-% Eisenpulver.

Es wurde im Zylinder einer Schneckenspritzgußmaschine bei 180°C aufgeschmolzen und in eine Form mit einer Wandtemperatur von 120°C gespritzt, um Scheiben von einem Durchmesser von 80 mm und einer Dicke von 4 mm herzustellen. Die Röntgendurchstrahlung dieser Scheiben zeigte weder Risse noch Poren.

Die sich anschließende Entbinderung wurde in einem nahezu dichten Trockenschrank mit einem Volumen von 50 l durchgeführt. Die Atmosphäre innerhalb des Trockenschranks wurde mittels eines Ventilators stark umgewälzt, um eine konstante Temperatur im gesamten Volumen und eine gute Wärmeübertragung auf den zu entbindernden Körper zu erreichen.

Der Trockenschrank wurde mit einer der zu entbindernden Scheiben bestückt und zwar so, daß die Scheibe an einem Draht aufgehängt wurde, der durch das Gehäuse nach oben geführt und mit einer Waage verbunden war, um den Gewichtsverlust kontinuierlich zu messen. Danach wurde der Schrank 20 Minuten lang mit einem Stickstoffstrom von 400 l/h durchströmt, um die Luft bis zu einem O₂-Gehalt von unter 2 % zu verdrängen. Gleichzeitig wurde die Atmosphäre im Trockenschrank auf 120°C aufgeheizt. Die Entbinderung wurde mit dem Zudosieren von 25 g/h 100 %iger Salpetersäure zum Stickstoffstrom von 400 l/h gestartet, so daß die Konzentration der Salpetersäure im dosierten Gasstrom ca. 2 Vol.-% betrug.

Bei einem Ausgangsgewicht der Scheibe von 102,0 g betrug der Eisenanteil 88,7 Gew.-% entsprechend 90,5 g, der Anteil an Binder und Dispergator 11,3 Gew.-% entsprechend 11,5 g. Der Anteil an Polyoxymethylen war 9,9 Gew.-% entsprechend 10,1 g. Die folgende Tabelle zeigt die Gewichtsabnahme als Funktion der Zeit.

| Zeit (min) | Gewichtsabnahme (g) | Entbinderungsgrad (%) |
|---|---|---|
| 0 | 0 | 0 |
| 10 | 2,85 | 24,8 |
| 20 | 4,75 | 41,3 |
| 30 | 6,16 | 53,6 |
| 40 | 7,21 | 62,7 |
| 50 | 8,29 | 72,1 |
| 60 | 9,40 | 81,7 |
| 70 | 10,26 | 89,2 |
| 80 | 10,26 | 89,2 |

Die Gewichtsabnahme nach 80 min bei 120°C entsprach etwa dem Anteil des im Bindemittel enthaltenen Polyoxymethylencopolymerisats.

Danach wurde die Scheibe in einem Kammerofen mit einer Aufheizgeschwindigkeit von 40°C/min auf 400°C erhitzt und 1 h bei dieser Temperatur gehalten. Dabei nahm das Gewicht um weitere 1,24 g ab, entsprechend einem Entbinderungsgrad von 100 %. Die Scheibe zeigte weder Dimensionsänderungen noch Risse.

### Beispiel 2

In einen Doppelwellenextruder mit 30 mm Wellendurchmesser wurden 5,0 kg/h eines Polyoxymethylens, das 2,5 Gew.-% Butandiolformal als Comonomeres enthielt und 0,5 kg/h eines hochtaktischen Polypropylenhomopolymers (Dichte = 0,908 g/ml; MFI 230/2,16 = 12 g/10 min, nach DIN 53 735) dosiert. Das Material wurde bei 180°C aufgeschmolzen, die Wellendrehzahl betrug 70 Upm.

In einen seitlich an diesen Extruder angeflanschten Extruder, der mit einer Förderwendel für Pulver ausgerüstet war, wurden 11,6 kg/h Siliziumpulver mit einem mittleren Partikeldurchmesser von 5 »m, das 1,0 Gew.-% eines Polyethylenoxids der Molmasse 400 als Dispergator enthielt, dosiert und bis zum Ende der Förderschnecke auf 170°C erwärmt.

Am Ende der Förderstrecke wurde das Metallpulver mit dem Schmelzestrom vermischt, die Mischung geschert, homogenisiert und als Stränge durch Düsen gepreßt. Die Stränge wurden in einem Luftstrom abgekühlt und granuliert. Das so erhaltene Granulat enthielt 54 Vol.-% Siliziumpulver.

Es wurde im Zylinder einer Schneckenspritzgußmaschine bei 180°C aufgeschmolzen und in eine Form mit einer Wandtemperatur von 120°C gespritzt, um Scheiben von einem Durchmesser von 80 mm und einer Dicke von 4 mm herzustellen.

Die sich anschließende Entbinderung wurde in einem nahezu dichten Trockenschrank mit einem Volumen von 50 l durchgeführt. Die Atmosphäre innerhalb des Trockenschranks wurde mittels eines Ventilators stark umgewälzt, um eine konstante Temperatur im gesamten Volumen und eine gute Wärmeübertragung auf den zu entbindernden Körper zu erreichen.

Der Trockenschrank wurde mit einer der zu entbindernden Scheiben bestückt und zwar so, daß die Scheibe an einem Draht aufgehängt wurde, der durch das Gehäuse nach oben geführt und mit einer Waage verbunden war, um den Gewichtsverlust kontinuierlich zu messen. Danach wurde der Schrank 20 Minuten lang mit einem Stickstoffstrom von 400 l/h durchströmt, um die Luft bis zu einem O₂-Gehalt von unter 2 % zu verdrängen. Gleichzeitig wurde die Atmosphäre im Trockenschrank auf 150°C aufgeheizt. Die Entbinderung wurde mit dem Zudosieren von 10 l/h BF₃ zum Stickstoffstrom von 400 l/h gestartet, so daß die Konzentration des BF₃ im dosierten Gasstrom 2,5 Vol.-% betrug.

Bei einem Ausgangsgewicht der Scheibe von 37,5 g betrug der Siliziumanteil 67,4 Gew.-% entsprechend 25,3 g, der Anteil an Binder und Dispergator 32,6 Gew.-% entsprechend 12,2 g. Der Anteil an Polyoxymethylen betrug 29,0 Gew.-% entsprechend 10,9 g. Die folgende Tabelle zeigt die Gewichtsabnahme als Funktion der Zeit.

| Zeit (min) | Gewichtsabnahme (g) | Entbinderungsgrad (%) |
|---|---|---|
| 0 | 0 | 0 |
| 5 | 3,36 | 27,5 |
| 10 | 5,28 | 43,0 |
| 15 | 6,79 | 55,7 |
| 20 | 7,98 | 65,4 |
| 25 | 9,11 | 74,6 |
| 30 | 10,18 | 83,4 |
| 35 | 11,15 | 91,4 |
| 40 | 11,15 | 91,4 |

Wiederum entspricht die Gewichtsabnahme nach der säurekatalysierten Behandlung etwa dem Anteil des Polyoxymethylencopolymerisats B1) im Bindemittel.

Danach wurde die Scheibe in einem Kammerofen mit einer Aufheizgeschwindigkeit von 40°C/min auf 400°C erhitzt und 1 h bei dieser Temperatur gehalten. Dabei nahm das Gewicht um weitere 1,05 g ab, entsprechend einem Entbinderungsgrad von 100 %. Die Scheibe zeigte weder Dimensionsänderungen noch Risse.

## Patentansprüche

1. Thermoplastische Massen für die Herstellung metallischer Formkörper, enthaltend
A) 40 - 70 Vol.% eines sinterbaren pulverförmigen Metalls oder einer pulverförmigen Metallegierung oder deren Mischungen,
B) 30 - 60 Vol.% einer Mischung aus
B1) 80 - 98 Gew.-% eines Polyoxymethylenhomo- oder -copolymerisats und
B2) 2 - 20 Gew.-% eines Polyolefins oder einer Mischung von Polyolefinen
als Bindemittel, und
C) 0 - 5 Vol.% eines Dispergierhilfsmittels.

2. Verwendung der thermoplastischen Massen nach den Ansprüchen 1 - 2 zur Herstellung von metallischen Formkörpern.

3. Verfahren zur Herstellung einer thermoplastischen Masse, enthaltend als wesentliche Komponenten
A) 40 - 70 Vol.% eines sinterbaren pulverförmigen Metalls oder einer pulverförmigen Metallegierung oder deren Mischungen,
B) 30 - 60 Vol.% einer Mischung aus
B1) 80 - 98 Gew.-% eines Polyoxymethylenhomo- oder -copolymerisats und
B2) 2 - 20 Gew.-% eines Polyolefins oder einer Mischung von Polyolefinen
als Bindemittel, und
C) 0 - 5 Vol.% eines Dispergierhilfsmittels,
dadurch gekennzeichnet, daß man
a) die Komponente B) bei Temperaturen von 150 - 220°C aufschmilzt und anschließend
b) die Komponente A) gegebenenfalls zusammen mit C) bei Temperaturen im gleichen Bereich wie in Schritt a) zu dem Schmelzestrom der Komponente B) dosiert.

4. Verfahren zur Entfernung des Bindemittels aus einem Formkörper aus einer thermoplastischen Masse gemäß Anspruch 1, dadurch gekennzeichnet, daß man
a) durch Spritzguß oder Extrusion einen Formkörper aus der thermoplastischen Masse herstellt,
b) den so erhaltenen Formkörper bei einer Temperatur im Bereich von 20 bis 180°C 0,1 - 24 h mit einer gasförmigen säurehaltigen Atmosphäre behandelt und
c) anschließend 0,1 - 12 h auf eine Temperatur von 250 - 500°C erhitzt.

## Claims

1. Thermoplastic compositions for producing shaped metallic articles, containing
A) 40 - 70% by volume of a sinterable pulverulent metal or of a pulverulent metal alloy or of a mixture thereof,
B) 30 - 60% by volume of a mixture of
B1) 80 - 98% by weight of a polyoxymethylene homopolymer or copolymer and
B2) 2 - 20% by weight of a polyolefin or of a mixture of polyolefins
as binder, and
C) 0 - 5% by volume of a dispersant.

2. The use of the thermoplastic composition of claim 1 for producing shaped metallic articles.

3. A process for preparing a thermoplastic composition containing as essential components
A) 40 - 70% by volume of a sinterable pulverulent metal or of a pulverulent metal alloy or of a mixture thereof,
B) 80 - 98% by volume of a mixture of
B1) 80 - 98% by weight of a polyoxymethylene homopolymer or copolymer and
B2) 2 - 20% by weight of a polyolefin or of a mixture of polyolefins
as binder, and
C) 0 - 5% by volume of a dispersant,
which comprises
a) melting component B) at 150 - 220°C and then
b) metering component A) with or without C) into the melt stream of component B) at a temperature within the same range as in step a).

4. A process for removing the binder from a shaped article produced from a thermoplastic composition as claimed in claim 1, which comprises
a) producing a shaped article from the thermoplastic composition by injection or extrusion molding,
b) treating the resulting shaped article at from 20 to 180°C with a gaseous acid-containing atmosphere for 0.1 - 24 h, and
c) then heating it at 250 - 500°C for 0.1 - 12 h.

## Revendications

1. Matériaux thermoplastiques pour la fabrication d'articles moulés métalliques, contenant
A) 40 à 70% en volume d'un métal pulvérulent frittable, ou d'un alliage de métaux pulvérulent frittable, ou de leurs mélanges,
B) 30 à 60% en volume d'un mélange constitué de
B1) 80 à 98% en poids d'un homopolymère ou copolymère de polyoxyméthylène et
B2) 2 à 20% en poids d'une polyoléfine, ou d'un mélange de polyoléfines,
à titre de liant et
C) 0 à 5% en volume d'un adjuvant de dispersion.

2. Utilisation des matériaux thermoplastiques suivant l'une quelconque des revendications 1 et 2 pour la fabrication d'articles moulés métalliques.

3. Procédé de fabrication d'un matériau thermoplastique, contenant, à titre de composants essentiels,
A) 40 à 70% en volume d'un métal pulvérulent frittable, ou d'un alliage de métaux pulvérulent frittable, ou de leurs mélanges,
B) 30 à 60% en volume d'un mélange constitué de
B1) 80 à 98% en poids d'un homopolymère ou copolymère de polyoxyméthylène et
B2) 2 à 20% en poids d'une polyoléfine, ou d'un mélange de polyoléfines,
à titre de liant et
C) 0 à 5% en volume d'un adjuvant de dispersion,
caractérisé en ce que
a) on fait fondre le composant B) à des températures de 150 à 220°C et, ensuite,
b) on ajoute, en proportion dosée, le composant A) éventuellement en même temps que C), à des températures qui se situent dans la même plage que celle indiquée pour l'étape a) au courant fondu du composant B).

4. Procédé pour l'élimination du liant d'un article moulé au départ d'un matériau thermoplastique suivant la revendication 1, caractérisé en ce que
a) on fabrique un article moulé par extrusion ou par moulage par injection à partir du matériau thermoplastique,
b) on traite l'article moulé ainsi obtenu à une température qui se situe dans la plage de 20 à 180°C pendant 0,1 à 24 heures, par une atmosphère gazeuse contenant de l'acide et
c) on chauffe ensuite l'article à une température de 250 à 500°C pendant 0,1 à 12 heures.
